# EUROPÄISCHE PATENTANMELDUNG

(11) **EP 1 949 791 A1**
(43) Veröffentlichungstag der Anmeldung: **30.07.2008**
(21) Anmeldenummer: 08100109.1
(22) Anmeldetag: 04.01.2008
(51) Int. Cl.: A21B 3/15

(54) **Backunterlage aus einem flexiblen Material**

(30) Priorität: 26.01.2007 DE 202007001162 U
(71) Anmelder: Cofresco Frischhalteprodukte GmbH & Co. KG, 32427 Minden (DE)
(72) Erfinder: ARNING, Hans-Jürgen, 32312, Lübbecke (DE)
(74) Vertreter: Dantz, Jan Henning

(57) **Zusammenfassung**

Eine Backunterlage (1) aus einem flexiblen Material, umfasst eine mittige plattenförmige Unterlage (2), die randseitig von Kanten (3, 4) umgeben ist, wobei die Kanten (3, 4) hochklappbar sind und im Eckbereich Verbindungsmittel (5, 6) aufweisen, um die Kanten (3, 4) lösbar aneinander zu fixieren. Dadurch kann der Benutzer wahlweise die Kanten (3, 4) hochklappen, um auch flüssige Backwaren auf der Backunterlage (1) zu backen, oder nach Benutzung der Backunterlage (1) kann diese auf ein kleineres Format zusammengelegt oder gerollt werden.

## Beschreibung

Die vorliegende Erfindung betrifft eine Backunterlage aus einem flexiblen Material, mit einer mittigen plattenförmigen Unterlage, die randseitig von Kanten umgeben ist.

Es sind Backbleche aus Metall bekannt, die mittig eine plattenförmige Unterlage aufweisen, die randseitig von nach oben hervorstehenden Kanten umgeben ist. Bei diesen starren Backunterlagen besteht das Problem, dass diese nach der Benutzung relativ viel Stauraum benötigen und gerade im Kantenbereich schlecht zu reinigen sind.

Ferner gibt es flexible Backunterlagen, die flach ausgebildet sind und ein zu backendes Gut darauf abgestellt werden kann. Gerade beim Backen mit flüssigen Backwaren besteht jedoch das Problem, dass die Flüssigkeit über die Backunterlage hinaus ablaufen kann und dort für Verunreinigungen sorgt.

Es ist daher Aufgabe der vorliegenden Erfindung eine Backunterlage aus einem flexiblen Material zu schaffen, die leicht zu reinigen ist und wenig Stauraum benötigt. Zudem sollen auch flüssige Backwaren damit gebacken werden können.

Diese Aufgabe wird mit einer Backunterlage mit den Merkmalen des Anspruches 1 gelöst.

Erfindungsgemäß weist die Backunterlage aus einem flexiblen Material eine mittige plattenförmige Unterlage auf, die randseitig von Kanten umgeben ist, wobei die Kanten hochklappbar sind und im Eckbereich Verbindungsmittel aufweisen, um die Kanten lösbar aneinander zu fixieren. Dadurch kann der Benutzer wahlweise die Kanten hochklappen, um auch flüssige Backwaren auf der Backunterlage zu backen, oder nach Benutzung der Backunterlage kann diese auf ein kleineres Format zusammengelegt oder gerollt werden, so dass sie nur wenig Stauraum benötigt. Durch die Verbindungsmittel in dem Eckbereich ist der Benutzer in der Handhabung äußerst flexibel.

Gemäß einer bevorzugten Ausgestaltung der Erfindung sind die Kanten von der plattenförmigen Unterlage über Knicklinien getrennt. Dies vereinfacht die Handhabung, da der Benutzer eine vordefinierte Kante nach oben klappt und insofern die Faltkante an der Knicklinie vorgegeben ist.

Für eine einfache Handhabung sind die Verbindungsmittel vorzugsweise als Rastmittel ausgebildet, die ein Einrasten und ein Lösen ermöglichen. Dabei können die Verbindungsmittel einen Knopf und eine Öffnung aufweisen, wobei durch Einfügen des Knopfes in die Öffnung zwei benachbarte Kanten aneinander fixierbar sind. Diese einfache Ausbildung der Rastmittel ist für jeden Benutzer ohne weitere Erläuterung verständlich. Da die Öffnung sich an der Kante befindet, befindet sie sich im hochgeklappten Zustand der Kante beabstandet von der plattenförmigen Unterlage, so dass kein Heraustreten von Flüssigkeit erfolgt. Zudem können Knopf und Öffnung so aufeinander abgestimmt sein, dass eine Abdichtung erreicht wird.

Vorzugsweise ist an jeder Kante endseitig eine Gehrungslinie als Winkelhalbierende zwischen benachbarten Kanten ausgebildet. Dies erleichtert die Handhabung, wenn die Kanten hochgeklappt und dann aneinander fixiert sind, da im Bereich der Gärungslinie eine Faltkante von etwa 180° gebildet werden muss. Gemäß einer bevorzugten Ausgestaltung sind daher die Knicklinien und/oder die Gehrungslinien als Materialschwächungen ausgebildet, was das Falten der Backunterlage in den erforderlichen Bereichen erleichtert. Die Knicklinien können dabei in einem mittigen Bereich nach innen gebogen sein, um ein besonders leichtgängiges Hochklappen der Kanten zu ermöglichen.

Die Backunterlage besteht aus einem flexiblen Material, vorzugsweise aus Silikon. Denn Silikon. Kann auch für hohe Backtemperaturen eingesetzt werden und lässt sich zudem leicht reinigen. Zudem kann Silikon in der gewünschten Farbgebung gegebenenfalls auch mit Markierungen bereitgestellt werden.

Gemäß einer weiteren Ausgestaltung der Erfindung ist die Backunterlage mit heruntergeklappten Kanten flach ausgebildet und für eine Lagerung zusammenrollbar. Dann kann die Backunterlage auch als Einheit mit einem Ring vertrieben werden, wobei die Backunterlage zusammengerollt in den Ring eingesteckt ist, so dass nur ein minimales Lagervolumen für die Backunterlage erforderlich ist. Zudem kann die Backunterlage mit heruntergeklappten Kanten auf einfache Weise gereinigt werden.

Die Erfindung wird nachfolgend anhand eines Ausführungsbeispieles mit Bezug auf die beigefügten Zeichnungen näher erläutert. Es zeigen:

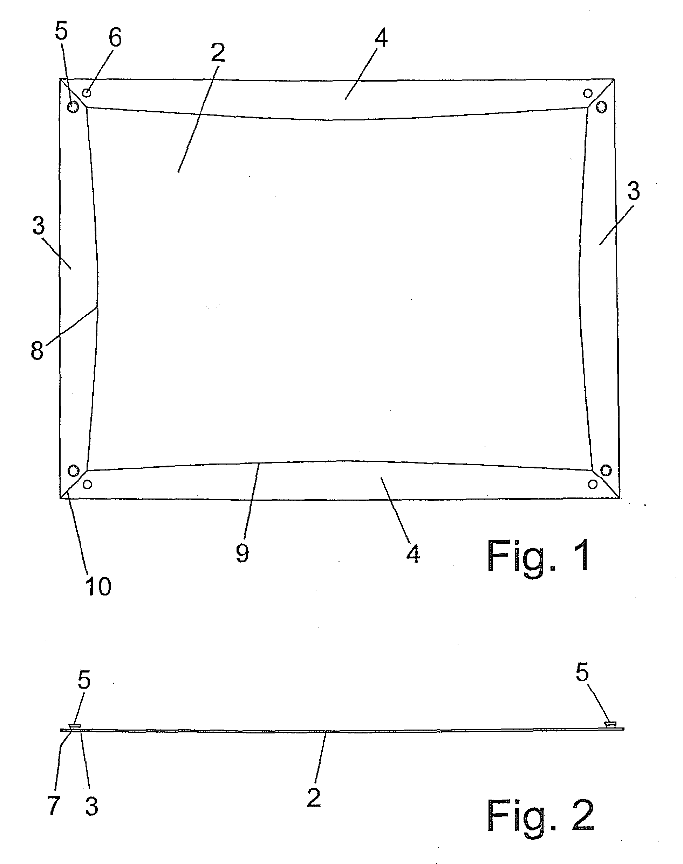

- Figur 1: eine Draufsicht auf eine erfindungsgemäße Backunterlage mit heruntergeklappten Kanten;
- Figur 2: eine Seitenansicht auf die Backunterlage der Figur 1;
- Figur 3: eine perspektivische Ansicht auf die Backunterlage der Figur 1 mit hochgeklappten Kanten, und
- Figur 4: eine perspektivische Ansicht der Backunterlage der Figur 1 im zusammengerollten Zustand.

Eine Backunterlage 1 besteht aus einem flexiblen Material, vorzugsweise Silikon, das auch hitzebeständig ist. Die Backunterlage 1 umfasst eine mittige plattenförmige Unterlage 2, die randseitig von Stirnkanten 3 und Längskanten 4 umgeben ist.

Dadurch besitzt die Unterlage 2 eine im Wesentlichen rechteckförmige Gestaltung. An jeder Ecke zwischen Stirnkante 3 und Längskante 4 sind Verbindungsmittel 5 und 6 vorgesehen, um die Kanten 3 und 4 lösbar miteinander zu verbinden.

In dem gezeigten Ausführungsbeispiel sind an den Längskanten 4 jeweils Öffnungen 6 ausgespart, in die ein Knopf 5 eingreifen kann. An jeder Stirnkante 3 sind jeweils 2 Knöpfe 5 integral ausgebildet, die einen verjüngten Halsabschnitt 7 aufweisen. Wenn die Knöpfe 5 in die Öffnungen 6 eingesteckt werden, sind die Stirnkanten 3 und Längskanten 4 lösbar aneinander fixiert.

Um das Hochklappen der Stirnkanten 3 und Längskanten 4 zu erleichtern, sind die Stirnkanten 3 über eine Knicklinie 8 und die Längskanten 4 über eine Knicklinie 9 von der plattenförmigen Unterlage 2 getrennt. Die Knicklinien 8 und 9 können als Materialschwächungen oder Prägungen ausgebildet sein, um ein Hochklappen zu erleichtern. Ferner ist eine Gehrungslinie 10 an jeder Ecke vorgesehen, die als Winkelhalbierende zwischen benachbarten Stirnkanten 3 und Längskanten 4 ausgebildet ist. Auch die Gehrungslinie 10 ist als Materialschwächung oder Prägung ausgebildet, um ein Falten der Kanten 3 und 4 zu erleichtern.

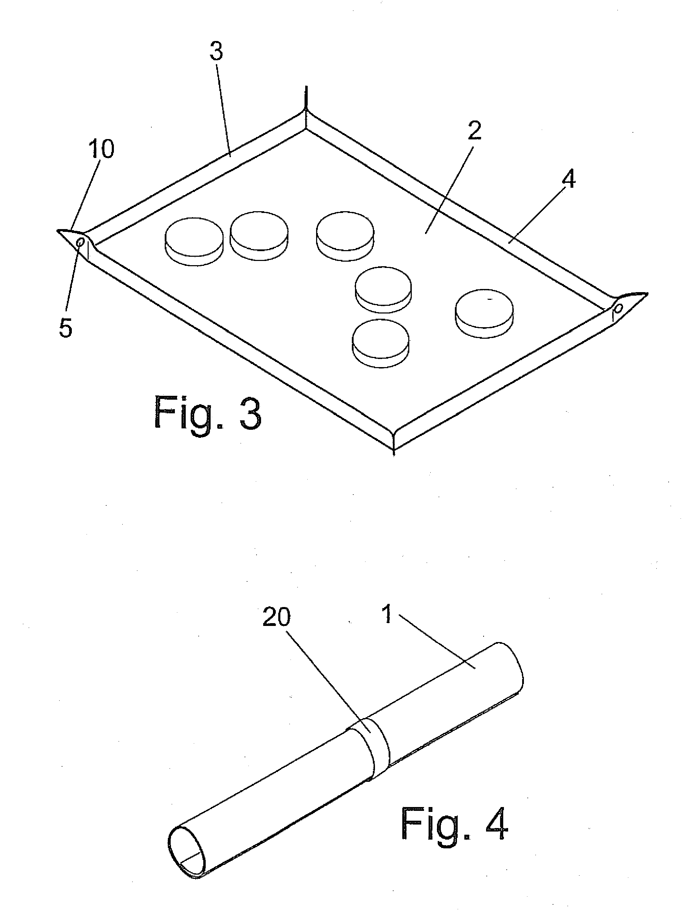

In Figur 3 ist die Backunterlage mit hochgeklappten Stirnkanten 3 und Längskanten 4 gezeigt, die über die Verbindungsmittel 5 und 6 aneinander gehalten sind. Die Knicklinien 8 und 9 sind dabei in einem mittigen Bereich leicht nach innen gebogen, so dass das Hochklappen der Kanten 3 und 4 erleichtert ist. Wenn in dieser Position flüssige Backwaren auf der Unterlage 2 angeordnet sind, wird ein Heraustreten der Backwaren durch die Kanten 3 und 4 wirksam verhindert.

Nach dem Backvorgang können die Verbindungsmittel 5 und 6 wieder voneinander gelöst werden, so dass die Backunterlage 1 wieder in eine flache Position gelangt. In dieser Position kann die plattenförmige Unterlage 2 zusammen mit den heruntergeklappten Stirnkanten 3 und Längskanten 4 leicht gereinigt werden.

Nach dem Reinigen kann die Backunterlage 1 zusammengerollt werden und zum Lagern in einen Ring 20 eingesteckt werden, wie dies in Figur 4 dargestellt ist. Dadurch wird nur ein minimaler Stauraum für die Backunterlage 1 benötigt.

In dem dargestellten Ausführungsbeispiel ist die Backunterlage 1 aus einer dünnen Schicht Silikon gebildet, die beispielsweise eine Dicke von 1 mm bis 4 mm auf weist. Es können jedoch auch andere Materialien zum Einsatz kommen.

Als Verbindungsmittel werden in diesem Ausführungsbeispiel jeweils Knöpfe 5 und Öffnungen 6 eingesetzt. Es ist natürlich auch möglich, andere Rastmittel in Form von Haken, Rillen oder Klemmelemente vorzusehen, um ein lösbares Fixieren der Kanten 3 und 4 zu erreichen.

## Patentansprüche

1. Backunterlage (1) aus einem flexiblen Material, mit einer mittigen plattenförmigen Unterlage (2), die randseitig von Kanten (3, 4) umgeben ist, **dadurch gekennzeichnet, dass** die Kanten (3, 4) hochklappbar sind und im Eckbereich Verbindungsmittel (5, 6) aufweisen, um die Kanten (3, 4) lösbar aneinander zu fixieren.

2. Backunterlage nach Anspruch 1, **dadurch gekennzeichnet, dass** die Kanten (3, 4) von der plattenförmigen Unterlage (2) über Knicklinien (8, 9) getrennt sind.

3. Backunterlage nach Anspruch 1 oder 2, **dadurch gekennzeichnet, dass** als Verbindungsmittel (5, 6) Rastmittel vorgesehen sind, die ein Einrasten und ein Lösen ermöglichen.

4. Backunterlage nach einem der Ansprüche 1 bis 3, **dadurch gekennzeichnet, dass** als Verbindungsmittel ein Knopf (5) und eine Öffnung (6) vorgesehen sind und durch Einfügen des Knopfes (5) in die Öffnung (6) zwei benachbarte Kanten (3, 4) aneinander fixierbar sind.

5. Backunterlage nach einem der Ansprüche 1 bis 4, **dadurch gekennzeichnet, dass** an jeder Kante (3, 4) endseitig eine Gehrungslinie (10) als Winkelhalbierende zwischen benachbarten Kanten (3, 4) ausgebildet ist.

6. Backunterlage nach einem der Ansprüche 1 bis 5, **dadurch gekennzeichnet, dass** die Knicklinien (8, 9) und/oder die Gehrungslinien (10) als Materialschwächungen zum Erleichtern des Faltens ausgebildet sind.

7. Backunterlage nach einem der Ansprüche 1 bis 6, **dadurch gekennzeichnet, dass** die Knicklinien (8, 9) in einem mittigen Bereich nach innen gebogen sind.

8. Backunterlage nach einem der Ansprüche 1 bis 7, **dadurch gekennzeichnet, dass** die Backunterlage (1) aus Silikon ausgebildet ist.

9. Backunterlage nach einem der Ansprüche 1 bis 8, **dadurch gekennzeichnet, dass** die Backunterlage (1) mit heruntergeklappten Kanten (3, 4) flach ausgebildet ist und für eine Lagerung zusammenrollbar ist.

10. Backunterlage nach einem der Ansprüche 1 bis 9, mit einem Ring (20), wobei die Backunterlage (1) zusammengerollt in den Ring (20) eingesteckt ist.
